**Europäisches Patentamt**

**European Patent Office**

**Office européen des brevets**

(11) Veröffentlichungsnummer: **0 097 292**

**B1**

(12) **EUROPÄISCHE PATENTSCHRIFT**

(45) Veröffentlichungstag der Patentschrift:
26.11.86

(21) Anmeldenummer: **83105687.4**

(22) Anmeldetag: **10.06.83**

(51) Int. Cl.⁴: **C 22 B 1/24**

(54) Verfahren und Anlage zur Herstellung bindemittelloser Heissbriketts.

(30) Priorität: **22.06.82 DE 3223203**

(43) Veröffentlichungstag der Anmeldung:
**04.01.84 Patentblatt 84/1**

(45) Bekanntmachung des Hinweises auf die Patenterteilung:
**26.11.86 Patentblatt 86/48**

(84) Benannte Vertragsstaaten:
**AT BE CH FR GB IT LI LU NL SE**

(56) Entgegenhaltungen:
**DE-B-1 123 351**
**DE-B-1 142 442**
**DE-C-423 422**
**FR-A-630 926**
**FR-A-1 226 510**
**GB-A-238 246**
**GB-A-828 412**
**US-A-1 532 113**
**US-A-2 766 109**

(73) Patentinhaber: **Thyssen Aktiengesellschaft vorm. August Thyssen- Hütte, Kaiser- Wilhelm- Strasse 100, D-4100 Duisburg (DE)**

(72) Erfinder: **Rellermeyer, Heinrich, Dr.- Ing., Am Wesselshof 21, D-4100 Duisburg (DE)**
Erfinder: **Kaas, Werner, Buchenstrasse 173, D-4220 Dinslaken (DE)**

(74) Vertreter: **Patentanwaltsbüro Cohausz & Florack, Postfach 14 01 47, D-4000 Düsseldorf 1 (DE)**

**0 097 292**

## Beschreibung

Die Erfindung betrifft ein Verfahren und eine Anlage zur Herstellung von zur Verhüttung bestimmten bindemittellosen Heißbriketts aus Eisen enthaltenden pyrophoren, feinteiligen Feststoffen, wie trockenem Filterstaub aus der Stahlerzeugung und feinkörnigem Eisenschwamm aus Direktreduktionsanlagen.

Bei der Stahlerzeugung, z.B. nach dem Sauerstoff-Aufblasverfahren, fallen bei der CO-Rückgewinnung in Filtern abgeschiedene metallisierte Stäube an, die je nach dem Anteil an metallischem Eisen pyrophore oder hochpyrophore Eigenschaften besitzen.Auch feinkörniger Eisenschwamm, z.B. aus Direktreduktionsanlagen, weist oftmals starke pyrophore Eigenschaften auf. Aufgrund dieser Eigenschaften ist eine Bunkerung und Weiterverarbeitung der genannten feinteiligen Feststoffe in unbehandelter Form nicht möglich.

Es ist bekannt, übliche Filterstäube oder feinkörnigen Eisenschwamm unter Zusatz von Bindemitteln zu brikettieren. Die bisher als Bindemittel vorgeschlagenen Stoffe sind Produkte, wie Bitumen und andere Teerprodukte, Melasse, Sulfitablauge usw. Der Nachteil dieser Bindemittel besteht darin, daß sie durch ihre Anwesenheit die Konzentration der wertvollen Bestandteile im Produkt erniedrigen und oft für den nachfolgenden Aufbereitungsprozeß unzulässige Verunreinigungen, z.B. Schwefel, einbringen oder Probleme für den Umweltschutz bieten. Da sie in großen Mengen benötigt werden, sind die Kosten, die sich aus dem Preis für das Bindemittel selbst, den Transport- und Lagerkosten sowie eine Reihe anderer Kosten zusammensetzen, beträchtlich, so daß die Wirtschaftlichkeit in Frage gestellt ist.

Aus der DE-AS 11 42 442 ist ein Verfahren zur Brikettierung von Feinerzen bekannt, bei dem das Erz mit einem basischen Zuschlagstoff, wie Magnesiumhydrat, Kalkhydrat, Kalkstein oder Dolomit gemischt und die Mischung ohne Zusatz eines besonderen Bindemittels und ohne Anwesenheit von Ton unter hohem Druck brikettiert wird. Nach der Beschreibung läßt sich das Verfahren auch auf Filterstaub anwenden (s. Sp. 3/4, Tabelle 1). Ob es sich dabei um Filterstaub mit pyrophoren Eigenschaften handelt, kann der Beschreibung nicht entnommen werden. Die Nachteile dieses Kalt-Brikettierverfahrens liegen in den gegenüber dem Heißbrikettieren hohen Preßdrücken und dem damit verbundenen hohen Leistungsbedarf für die Brikettierpresse sowie in einem ungleichmäßigen Verdichtungsverhalten und dem damit verbundenen ungenügenden Brikettraumgewicht. Um nämlich einen Wiedereinsatz des Filterstaubes in Form von Briketts in Konvertern oder Elektroöfen problemlos zu ermöglichen, ist ein ausreichend hohes Raumgewicht erforderlich, das wesentlich über dem der verwendeten metallurgischen Schlacke liegen muß.

In der DB-AS 11 23 351 ist ein Verfahren zur Herstellung von Briketts beschrieben worden, bei dem eisenhaltige Verbindungen, wie Hochofengichtstaub und andere eisenhaltige Abfälle und Eisenverbindungen einschließlich naturlicher Eisenerze unter Entfernung von Sauerstoff teilweise reduziert werden. Das erhaltene Produkt aus Eisenoxyden und metallischem Eisen wird dann allein durch Anwendung von Wärme und Druck bei einer Temperatur unter 850° C und einem Druck über 687 bar brikettiert. Als Reduktionsmittel können ein reduzierendes Gas, wie CO oder $H_2$, ein organisches Material wie Stärke oder Zucker oder eine eisenhaltige Verbindung, wie ein teilweise zu metallischem Eisen reduziertss Fe und FeO enthaltendes Erz verwendet werden. Die Nachteils dieses Verfahrens sind derin zu sehen, daß vor der gewünschten Stückigmachung der feinverteilten Erze oder anderen feinverteilten, eisenhaltigen Materialien, ein Reduktionsprozeß notwendig ist, wie bei bekannten Direktreduktionsverfahren. Im Verlauf dieses Reduktionsverfahrens wird notwendigerweise eine Temperatur der feinverteilten Materialien eingestellt, die anschlienend eine Heißbrikettierung ermöglicht. Die Anwendung dieser Verfahrensweise ist jedoch auf die phyrophoren, feinverteilten Filterstäubs und den feinkörnigen Eisenschwamm nicht übertragbar, da diese bereits in metallisiertem Zustand vorliegen, aber auf eine derart niedrige Temperatur abgekühlt sind, daß eine Heißbrikettierung nicht mehr möglich ist.

Aus der DE-AS 15 33 852 ist ein Verfahren zur Herstellung von Eisenschwammbriketts bekannt, bei dem der poröse Eisenschwamm unmittelbar nach Austrag aus dem Drehrohofen im heißen Zustand bei Temperaturen von 400 bis 800° C und bei Preßdrücken von 1500 bis 3000 kp/cm² brikettiert wird mit der Maßgabe, daß die Wertepaare der Parameter Temperatur und Preßdruck innerhalb der angegebenen Bereiche so gewählt werden, daß eine Dichte von mehr als 5 g/cm³ erzielt wird.

Auch im "Sprechsaal-Fachbericht" 102. Jahrgang (1978), Heft 2, S. 58 bis 64 wird über die Heißbrikettierung von Eisenschwamm berichtet. Wie beim vorgenannten Verfahren wird dabei von einem Eisenschwamm ausgegangen, der aufgrund seiner Heißaustragstemperatur ohne zusätzliche Erhitzung der Heißbrikettierung unterworfen werden kann. Beide Verfahren eignen sich somit nicht für Filterstäube und Eisenschwanm, deren Austragstemperatur geringer als die Heißbrikettierungstemperatur ist.

Der Erfindung liegt nun die Aufgabe zugrunde, Eisen enthaltende pyrophore feinteilige Feststoffe unter Verzicht auf Bindemittel auf möglichst energiesparende, rationelle Weise unter Beachtung der pyrophoren Eigenschaft der Stoffe so zu kompaktieren, daß eine Verhüttung ermöglicht wird.

Die Aufgabe wird erfindungsgemäß dadurch gelöst, daß mehr als 4 Gew.-% metallisches Eisen enthaltender trockener feinteiliger Feststoff mit einer Temperatur von mehr als 200°C vor dem Brikettieren mit oxydierendem Gas durchblasen und dabei die Gasmenge so geregelt wird, daß durch Oxydation eines Teils des metallischen Eisens die Temperatur des feinteiligen Feststoffes auf 450 bis 650°C erhöht und unmittelbar anschließend heißbrikettiert wird.

Als oxydierendes Gas wird bevorzugt Luft oder mit Sauerstoff angereicherte Luft bzw. technisch reiner Sauerstoff verwendet. Das oxydierende Gas kann vorgewärmt sein.

Der so aufgeheizte feinteilige Feststoff wird in einer Brikettierpresse zu Briketts verpreßt, wobei mit Vorteil eine Walzenbrikettierpresse mit einem Walzenpreßdruck von mehr als 6 kN/cm Walzenbreite verwendet wird.

2

Vor der Brikettierpresse kann ein Zwischenbunker für den aufgeheizten feinteiligen Feststoff angeordnet sein, um die Brikettierpresse kontinuierlich betreiben zu können. Dies wirkt sich in einer Verbesserung der Brikettqualität aus.

Weisen die zu brikettierenden feinteiligen Feststoffe keinen oder nur einen geringen Kalkanteil auf, so wird ihnen vor dem Brikettieren 3 bis 6 Gew.-% Feinkalk zugesetzt. Hierdurch wird eine Calciumferrit-Bildung ermöglicht, die zu einer Verbesserung der Abriebfestigkeit der erzeugten Briketts führt.

Die Briketts werden im Gegensatz zur üblichen Verfahrensweise bei der Eisenschwammbrikettierung, bei der eine Wasserkühlung angewendet wird, in einem Luftstrom auf eine Temperatur unter 100°C abgekühlt, um eine Reoxydation zu verhindern. Die Briketts werden danach in einen Bunker gegeben, wo sie belüftet werden, um einen Wärmestau zu verhindern. Aus dem Bunker können die Briketts zum Einsatz im Stahlwerk entnommen werden.

Die Erfindung bietet eine Lösung der mit der Weiterverarbeitung der staubförmigen bzw. feinkörnigen pyrophoren Feststoffe verbundenen Probleme und ermöglicht es, die Stoffe auf energiesparende Weise auf Heißbrikettiertemperatur zu bringen. An sich mußte damit gerechnet werden, daß das Durchblasen der Stoffe mit oxydierenden Gase wegen deren pyrophorer Eigenschaft nicht gefahrlos durchführbar sein würde.

Eine Anlage zur Durchführung des Verfahrens, bestehend aus einer Brikettierpresse mit Materialzuführung, einem Brikettkühler und einem Bunker, ist dadurch gekennzeichnet, daß vor der Brikettierpresse eine drehbare Trommel angeordnet ist, mit einer an einem Ende angeordneten Zuführung für den feinteiligen pyrophoren trockenen Feststoff, einem am anderen Ende angeordneten Austrag für den auf Heißbrikettierungstemperatur erhitzten Feststoff, einer Gaszuleitung für das oxydierende Gas und einer Zuführung für Feinkalk, wobei durch Regelorgane die Verweilzeit des Feststoffes in der Trommel, die zugeführte Menge des oxydierenden Gases und die zugesetzte Feinkalkmenge einzeln regelbar sind.

Nach einem weiteren Merkmal der Erfindung ist die drehbare Trommel geneigt angeordnet und mit einer Anzahl an den Wänden angebrachten Lüftern ausgerüstet, die zur Durchlüftung des feinteiligen Feststoffes eingerichtet sind.

Anstelle der drehbaren Trommel kann gemäß einer anderen Ausführungsform der Erfindung ein Fließbett vorgesehen sein mit Gaseindüsungszuleitungen zur Unterseite des Fließbettes. Das Gas kann auch in eine Wirbelschicht eingeführt werden.

Der Brikettkühler besteht bevorzugt aus einem endlosen Band mit einem oder mehreren Luftgebläsen. Der verwendete Bunker für die Briketts ist mit einem oder mehreren Luftgebläse ausgerüstet, um einen Wärmestau zu vermeiden. Anstelle von Luft kann auch ein Luft-Stickstoff-Gemisch oder technisch reiner Stickstoff als Kühlmedium in den Bunker geblasen werden.

Ein Ausführungsbeispiel des erfindungsgemäßen Verfahrens und der erfindungsgemäßen Anlage werden im folgenden anhand der Zeichnung näher beschrieben. Es zeigen

Fig. 1 und 2 die erfindungsgemäße Brikettierung von pyrophorem Filterstaub aus einer CO-Rückgewinnungsanlage eines Sauerstoffaufblaskonverters und

Fig. 3 die Brikettierung von feinkörnigem pyrophorem Eisenschwamm aus einer Direktreduktionsanlage.

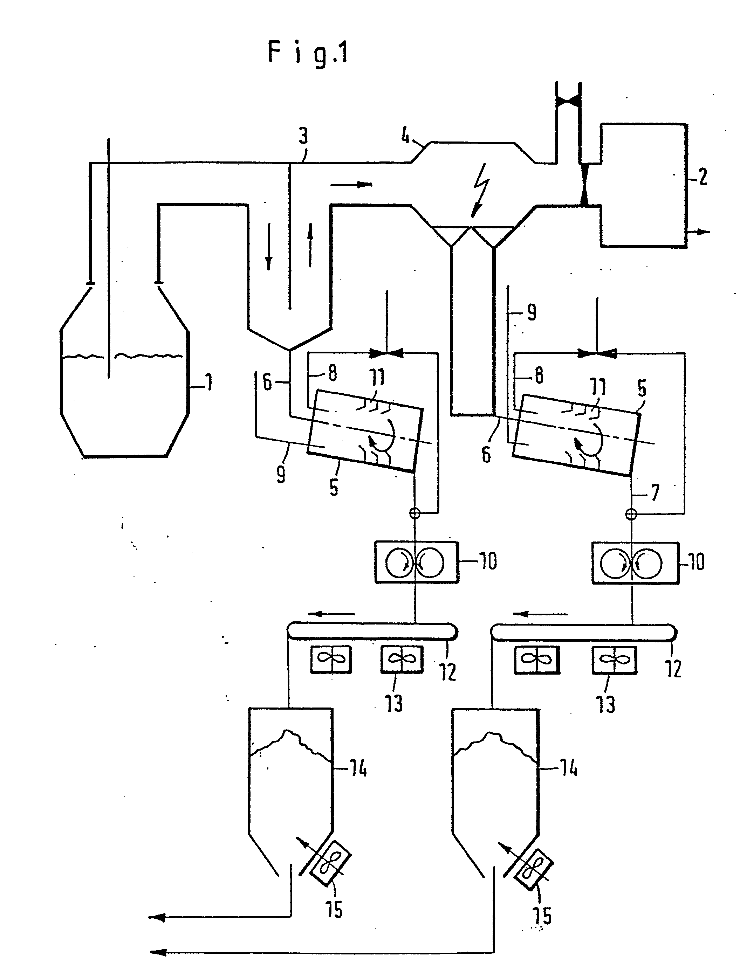

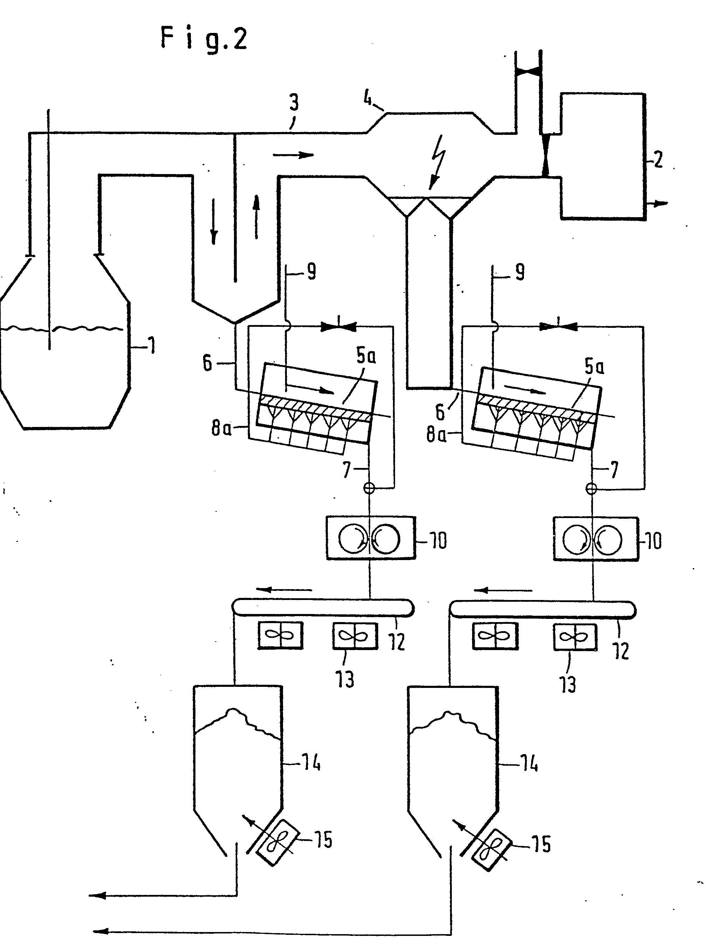

Fig. 1 und 2 zeigen einen Sauerstoffaufblas-Konverter 1, der mit einer CO-Rückgewinnungsanlage 2 ausgerüstet ist. Diese weist einen Grobfilter 3 und einen Elektrofilter 4 auf. Der in diesen Filtern zurückgehaltene feinteilige pyrophore Filterstaub wird gemäß Fig. 1 einer drehbaren Trommel 5 über die Zuführung 6 zugeleitet. Die drehbare Trommel 5, die mit Lüftern 11 an den Wänden ausgerüstet ist, weist eine Leitung für oxydierendes Gas und eine Zuführung für Feinkalk auf. Der feinteilige pyrophore Filterstaub, der eine Temperatur von über 200°C aufweist, wird in der Trommel mit einer Luftmenge beaufschlagt, die durch die Gasleitung 8 zugeführt wird. Durch die einsetzende Oxydation eines Teiles des metallischen Eisens des Filterstaubes wird die Temperatur des Filterstaubes auf die Heißbrikettierungstemperatur von 450 bis 650°C angehoben, wobei die Temperaturerhöhung über die zugeführte Luftmenge pro Zeiteinheit und über die Verweilzeit in der Trommel gesteuert wird. Die Zuführung 6, die Gasleitung 8, die Zuführung 9 für Feinkalk und ein Austrag 7, der am anderen Ende der Trommel 5 angeordnet ist, sind zu diesem Zweck mit nicht dargestellten Regelorganen ausgerüstet, so daß die Verweilzeit des Feststoffes in der Trommel, die zugeführte Menge des oxydierenden Gases (Luft) und die zugesetzte Feinkalkmenge einzeln regelbar sind.

Gemäß Fig. 2 ist anstelle der drehbaren Trommel 5 ein Fließbett 5a angeordnet, das mit Lufteindüsungszuleitungen 8a ausgerüstet wird.

Der auf Brikettiertemperatur erhitzte Filterstaub wird bei beiden Ausführungsformen über den Austrag 7 der Brikettierpresse 10 zugeleitet, in welcher der Filterstaub zu Briketts verpreßt wird. Die fertigen Briketts gelangen zur Kühlung auf einen Brikettkühler, der in Form eines endlosen Bandes 12 ausgebildet ist. Unter dem Band befinden sich zwei Luftgebläse 13, mit denen die Briketts auf eine Temperatur unter 100°C gekühlt werden, um eine Reoxydation zu verhindern. Die gekühlten Briketts gelangen anschließend in einen Bunker 14, aus dem sie zur Verwendung im Stahlwerk entnommen werden können. Um einen Wärmestau im Bunker zu vermeiden, ist dieser mit einem Luftgebläse 15 ausgerüstet.

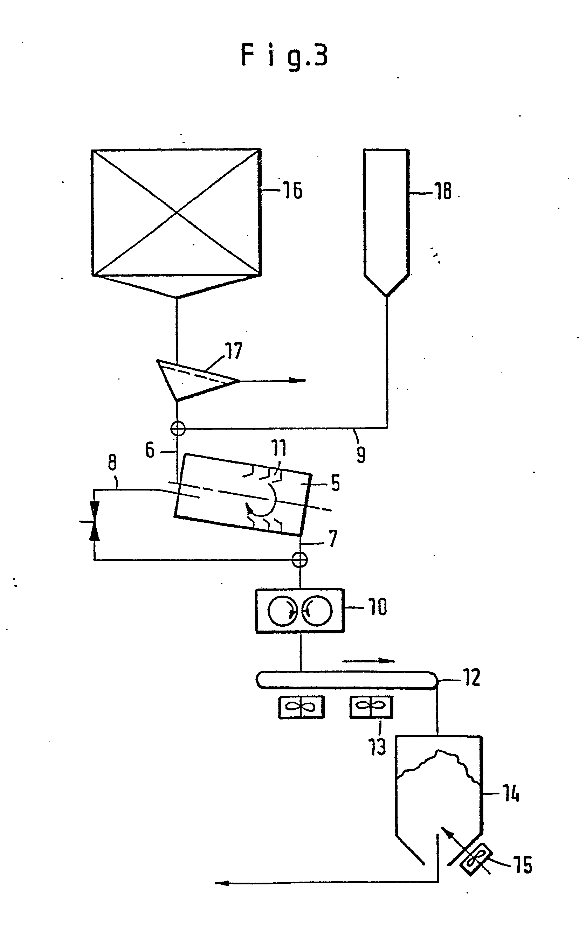

Fig. 3 zeigt eine Direktreduktionsanlage 16 zur Herstellung von Eisenschwamm. Der erzeugte Eisenschwamm gelangt auf die Siebvorrichtung 17, mit der die feinkörnigen Anteile, die nicht direkt im Stahlwerk eingesetzt werden können, abgetrennt werden können. Diese feinkörnigen Anteile gelangen über eine Zuführung 6, wie bei der vorbeschriebenen Ausführung, in eine drehbare Trommel 5, in welcher die Temperatur durch Zuführung eines oxydierenden Gases (Luft) auf die Heißbrikettierungstemperatur angehoben wird. Falls der Eisenschwamm keinen oder nur geringen Kalkanteil aufweist, wird Feinkalk aus dem Kalkbunker 18 in die Trommel 5 zugeführt und mit dem feinkörnigen Eisenschwamm vermischt. Hierdurch wird eine Calciumferrit-Bildung ermöglicht, die an den fertigen Briketts zu einer Verbesserung der Abriebfestigkeit führt. Die weiteren Verfahrensschritte entsprechen denjenigen der vorbeschriebenen Ausführung, wobei gleiche Vorrichtungsteile mit denselben Bezugszahlen bezeichnet worden sind.

Die in der nachfolgenden Tabelle aufgeführten Beispiele erläutern die Erfindung weiter, wobei Beispiel 1 die bisherige Arbeitsweise darstellt und die Beispiele 2 und 3 erfindungsgemäße Ausführungen beinhalten.

| Verfahrensschritte | Beispiel 1 | Beispiel 2 | Beispiel 3 |
|---|---|---|---|
| Filterstaubaustrag nach CO-Rückgewinnungsanlage Stahlwerk | ja | ja | ja |
| Chem. Analyse: | | | |
| Fe -Gehalt | 40-90% | 65,5% | 78,2% |
| $Fe_{met}$ -Gehalt | 10-70% | 13,0% | 54,7% |
| CaO -Gehalt | 3-20% | 8,1% | 7,1% |
| Filterstaubaustragstemperatur | 150-600° C | ~200° C | ~400° C |
| Filterstaubbefeuchtung im Mischer | ja | nein | nein |
| Feuchtegehalt | > 5% | – | – |
| Filterstaubeinlauf in Reaktionstrommel mit geregelter Luftzufuhr | nein | ja | ja |
| Filterstaubtemperatur Austrag Reaktionstrommel | – | ~550° C | ~600°C |
| Brikettierung bei einem Walzenpreßdruck (kN/cm Walzenbreite) | – | 100 kN/cm | 110 kN/cm |
| Kühlung der Briketts auf einem Bandkühler | – | < 100° C | <100° C |
| Bunkerung der Briketts im Belüftungsbunker (Zwischenlagerung) | – | ja | ja |
| Qualität der Briketts: | | | |
| a) Raumgewicht | | ~4,0 g/cm³ | ~5,5 g/cm³ |
| b) Kaltdruckfestigkeit | | 200-500 daN/Brikett | 1000-5000 daN/Brikett |
| Weiterverarbeitung | Deponie | Stahlwerk | Stahlwerk |

## Patentansprüche

1. Verfahren zur Herstellung von zur Verhüttung bestimmten bindemittellosen Heißbriketts aus Eisen enthaltenden pyrophoren, feinteiligen Feststoffen, wie trockenem Filterstaub der Stahlerzeugung und feinkörnigem Eisenschwamm aus Direktreduktionsanlagen, dadurch gekennzeichnet, daß der mehr als 4 Gew.-% metallisches Eisen enthaltende feinteilige trockene Feststoff mit einer Temperatur von mehr als 200°C vor dem Brikettieren mit oxydierendem Gas durchblasen und die Gasmenge so geregelt wird, daß durch Oxydation eines Teils des metallischen Eisens die Temperatur des feinteiligen Feststoffes auf 450 bis 650°C erhöht und unmittelbar anschließend heißbrikettiert wird.

2. Verfahren nach Anspruch 1, dadurch gekennzeichnet, daß als oxydierendes Gas Luft oder mit Sauerstoff angereicherte Luft oder technisch reiner Sauerstoff verwendet wird.

3. Verfahren nach Anspruch 1 und 2, dadurch gekennzeichnet, daß als Brikettierpresse eine Walzenbrikettierpresse mit einem Walzenpreßdruck von mehr als 6 kN/cm Walzenbreite verwendet wird.

4. Verfahren nach Anspruch 1 bis 3, dadurch gekennzeichnet, daß den feinteiligen Feststoffen vor dem Brikettieren 3 bis 6 Gew.-% Feinkalk zugesetzt wird.

5. Verfahren nach Anspruch 1 bis 4, dadurch gekennzeichnet, daß die Briketts nach dem Austritt aus der Brikettierpresse in einem Luftstrom auf eine Temperatur unter 100°C gekühlt werden.

6. Anlage zur Durchführung des Verfahrens nach Anspruch 1 bis 5, bestehend aus einer Brikettierpresse mit Materialzuführung, einem Brikettkühler und einem Bunker, dadurch gekennzeichnet, daß vor der Brikettierpresse (10) eine drehbare Trommel (5) angeordnet ist, mit einer an einem Ende angeordneten Zuführung (6) für den feinteiligen pyrophoren trockenen Feststoff, einem am anderen Ende angeordneten Austrag (7) für den auf Heißbrikettierungstemperatur erhitzten Feststoff, einer Gaszuleitung (8) und einer Zuführung (9) für Feinkalk, wobei durch Regelorgane die Verweilzeit des Feststoffes in der Trommel (5), die zugeführte Menge des oxydierbaren Gases und die zugesetzte Feinkalkmenge einzeln regelbar sind.

7. Anlage nach Anspruch 6, dadurch gekennzeichnet, daß die drehbare Trommel (5) geneigt angeordnet und mit einer Anzahl an den Wänden angebrach-Lüftern (19) zur Durchlüftung des feinteiligen Feststoffes ausgerüstet ist.

8. Anlage zur Durchführung des Verfahrens nach Ansprüch 1 bis 5, bestehend aus einer Brikettierpresse mit Materialzuführung, einem Brikettkühler und einem Bunker, dadurch gekennzeichnet, daß vor der Brikettierpresse (10) ein Fließbett (5a) angeordnet ist, mit einer an einem Ende angeordneten Zuführung (6) für den feinteiligen pyrophoren trockenen Feststoff, einem am anderen Ende angeordneten Austrag (7) für den auf Heißbrikettierungstemperatur erhitzten Feststoff, mehreren Gaszuleitungen (8a) zur Unterseite des Fließbettes (5a) und einer Zuführung (9) für Feinkalk, wobei durch Regelorgane die Verweilzeit der Feststoffe auf dem Fließbett (5a), die zugeführte Menge oxydierenden Gases und die zugesetzte Feinkalkmenge einzeln regelbar sind.

9. Anlage nach Anspruch 6 und 7 oder 8, dadurch gekennzeichnet, daß der Brikettkühler aus einem endlosen Band (12) mit einem oder mehreren Luftgebläsen (13) besteht.

10. Anlage nach Anspruch 6 bis 8, dadurch gekennzeichnet, daß der Bunker (14) mit einem oder mehreren Luftgebläsen (15) ausgerüstet ist.


**Claims**

1. Method of manufacturing hot briquettes not containing a binder and intended for smelting purposes from ironcontaining, pyrophoric, finely divided solids such as dry filter dust from steel production and fine-grain sponge iron from direct reduction plant, characterised in that the finely divided dry solid material containing more than 4% by weight of metallic iron, with a temperature of more than 200°C, is blown-through with oxidising gas before the briquetting, and the gas quantity is so controlled that by oxidation of a fraction of the metallic iron the temperature of the finely divided solid material is increased to 450 to 650°C and hot briquetting is carried out immediately afterwards.

2. Method according to claim 1, characterised in that air, or air enriched with oxygen, or technically pure oxygen, is used as oxidising gas.

3. Method according to claims 1 and 2, characterised in that a roller-type briquetting press is used as the briquetting press, with a roller application pressure of more than 6 kN/cm roller width.

4. Method according to claims 1 to 3, characterised in that 3 to 6 % by weight of fine lime is added to the finely divided solids before the briquetting.

5. Method according to claims 1 to 4, characterised in that the briquettes after issuing from the briquetting press are cooled in an air stream to a temperature below 100°C.

6. Installation for carrying out the method according to claims 1 to 5, comprising a briquetting press with material feed means, a briquette cooler, and a bunker, characterised in that upstream of the briquetting press (10) there is arranged a rotatable drum (5), with a feed means (6) arranged at one end for the finely divided pyrophoric dry solid material, a discharge means (7) arranged at the other end for the solid material heated to hot briquetting temperature, a gas feed duct (8) and a feed means (9) for fine lime, and by control elements the time of dwell of the solid material in the drum (5), the quantity of oxidisable gas fed-in, and the quantity of fine lime added are individually regulatable.

7. Installation according to claim 6, characterised in that the rotatable drum (5) is arranged in an inclined situation and is provided with a plurality of fans (19) arranged on the walls for aerating the finely divided solid material.

5

8. Installation for carrying out the method according to claims 1 to 5, comprising a briquetting press with material feed means, a briquette cooler, and a bunker, characterised in that upstream of the briquetting press (10) there is arranged a fluidised bed (5a), with a feed means (6) arranged at one end for the finely divided pyrophoric dry solid material, a discharge means (7) arranged at the other end for the solid material heated to hot briquetting temperature, a plurality of gas feed ducts (8a) to the underside of the fluidised bed (5a), and a feed means (9) for fine lime, the time of dwell of the solids on the fluidised bed (5a), the fed-in quantity of oxidising gas, and the quantity of fine lime added, being individually regulatable by control elements.

9. Installation according to claims 6 and 7 or 8, characterised in that the briquette cooler consists of an endless belt (12) with one or more air fans (13).

10. Installation according to claims 6 to 8, characterised in that the bunker (14) is provided with one or more air fans (15).

## Revendications

1.- Procédé pour la fabrication d'agglomérés sous forme de briquettes agglomérées à chaud, exemptes de liant, destinés à un traitement métallurgique, faites de matières solides finement divisées, pyrophores, contenant du fer, telles que de la poussière de filtre sèche de la production de l'acier, et de l'éponge de fer en grains fins provenant d'installation de réduction directe, procédé caractérisé en ce que la matière solide sèche finement divisée contenant plus de 4 % en poids de fer métal, ayant une température de plus de 200°C, est traversée avant l'agglomération par un souffle de gaz oxydant, la quantité de ce gaz étant réglée de façon telle que, par oxydation d'une partie du fer métal, la température de la matière solide finement divisée s'élève à 450 à 650°C et est ensuite immédiatement agglomérée à chaud, sous forme de briquettes.

2.- Procédé suivant la revendication 1, caractérisé en ce que, comme gaz oxydant, on utilise l'air, ou de l'air enrichi en oxygène ou de l'oxygène techniquement pur.

3.- Procédé suivant les revendications 1 et 2, caractérisé en ce que l'on utilise comme presse à agglomérer, une presse à briquettes à rouleaux avec une pression des rouleaux de plus de 6 kN/cm de largeur des rouleaux.

4.- Procédé suivant l'une des revendications 1 à 3, caractérisé en ce que l'on ajoute aux matières solides finement dispersées, avant de les agglomérer sous forme de briquettes, 3 à 6 % en poids de chaux pulvérisée.

5.- Procédé suivant les revendications 1 à 4, caractérisé en ce que les briquettes, en sortant de la presse, sont refroidies dans un courant d'air à une température inférieure à 100°C.

6.- Installation pour l'exécution du procédé suivant les revendications 1 à 5, constituée d'une presse à agglomérer avec alimentation en matières, un refroidisseur et un magasin, caractérisée en ce qu'en avant de la presse (10) à agglomérer, il est disposé un tambour rotatif (5), avec une alimentation (6) en matières solides sèches pyrophores finement divisées, placée à une extrémité, une sortie (7) placée à l'autre extrémité pour la matière solide chauffée à la température d'agglomération, une alimentation en gaz (8) et une arrivée (9) de chaux pulvérisée, pendant qu'au moyen d'organes de réglage, la durée de séjour de la matière solide dans le tambour (5), la quantité de gaz oxydant fournie et la quantité de chaux pulvérisée ajoutée, peuvent être réglées séparément.

7.- Installation suivant la revendication 6, caractérisée en ce que le tambour (5) rotatif est monté incliné, et est pourvu d'un certain nombre d'aérateurs (11) posés sur les parois, pour faire passer de l'air au travers de la matière solide finement divisée.

5.- Installation pour l'exécution du procédé suivant les revendications 1 à 5, constituée d'une presse à agglomérer sous forme de briquettes, avec alimentation en matières, d'un refroidisseur et d'un magasin, caractérisée en ce qu'en avant de la presse (10), il est placé un lit fluidisé (5a), avec une alimentation (6) placée à une extrémité pour la matière solide sèche, pyrophore, finement dispersée, une sortie (7), placée à l'autre extrémité, pour la matière solide chauffée à la température d'agglomération sous forme de briquettes à chaud, plusieurs conduites d'arrivée (8a) de gaz, dirigées vers la face inférieure du lit fluidisé (5a), et une arrivée (9) de chaux pulvérisée, pendant que l'on peut régler séparément, au moyen d'organes de réglage, la durée de séjour des matières solides dans le lit fluidisé (5a), la quantité de gaz oxydant fournie, et la quantité de chaux pulvérisée ajoutée.

9.- Installation suivant les revendications 6 et 7 ou 8, caractérisée en ce que le refroidisseur d'agglomérés sous forme de briquettes, est constitué par une bande sans fin (12) comportant une ou plusieurs soufflantes d'air (13).

10.- Installation suivant les revendications 6 à 8, caractérisée en ce que le magasin (14) est pourvu d'une ou plusieurs soufflantes d'air (15).

# Fig.1

# F i g.2

# F i g.3